# EUROPÄISCHE PATENTANMELDUNG

(11) **EP 2 511 167 A1**
(43) Veröffentlichungstag der Anmeldung: **17.10.2012**
(21) Anmeldenummer: 11162229.6
(22) Anmeldetag: 13.04.2011
(51) Int. Cl.: B62M 9/135, B62M 9/131, B62M 9/16

(54) **Fahrrad und Kettenführung**

(71) Anmelder: Rose Versand GmbH, 46395 Bocholt (DE)
(72) Erfinder: Heimerdinger, Andreas, 22605 Hamburg (DE)
(74) Vertreter: Kluin, Jörg-Eden

(57) **Zusammenfassung**

Fahrrad (1), mit einem ein Tretlagergehäuse (3) umfassenden Fahrradrahmen (2), mit mindestens zwei Kettenblättern (4, 4', 4"), mit einer Kette, und mit einer Kettenführung (5), die eine Kettenleitvorrichtung (6) umfasst, die ihre Position bei einem Positionswechsel der Kette ändert, wobei die Kettenleitvorrichtung (6) an dem Tretlagergehäuse (3) des Fahrradrahmens (2) befestigt ist.

## Beschreibung

Die Erfindung betrifft ein Fahrrad mit einer Kettenführung. Insbesondere bei Downhill-Fahrrädern besteht ein Bedürfnis, die Kette unabhängig von und daher meist zusätzlich zu Schaltvorrichtungen zu führen. Die Kette wird hierdurch insbesondere in seitlicher Richtung geführt. Dies geschieht derart, dass beispielsweise bei einem Rückwärtstreten und gleichzeitig etwa aufgrund von Unebenheiten des Geländes seitlichen Kräften auf die Kette keine (ganz oder teilweise erfolgten) unerwünschten Kettenblattwechsel stattfinden oder die Kette ganz abspringt. Hierdurch wird verhindert, dass der Fahrer in der Folge plötzlich ohne Widerstand tritt (wenn die Kette ganz abgesprungen ist) oder mit einem unerwarteten Widerstand tritt, wenn die Kette ganz oder teilweise auf ein anderes Kettenblatt (vorderes Zahnrad) gelangt ist.

Derartige Kettenführungen sind bereits bekannt. Beispielsweise zeigt die DE 10 2009 013 339 A1 eine derartige Kettenführung. Nachteilig bei Fahrrädern mit derartigen Kettenführungen ist, dass die Kettenführung nicht im wünschenswerten Maße verschleiß- bzw. reibungsarm ist und/oder zuverlässig funktioniert.

Die Erfindung hat es sich zur Aufgabe gemacht, ein Fahrrad mit einer derartigen Kettenführung ohne diesen Nachteil zu schaffen.

Diese Aufgabe wird durch das in Anspruch 1 wiedergegebene Fahrrad und die in Anspruch 11 wiedergegebene Kettenführung gelöst. Das erfindungsgemäße Fahrrad weist einen Fahrradrahmen auf, der ein Tretlagergehäuse umfasst. Das Fahrrad weist mindestens zwei Kettenblätter und eine Kette auf. Es ist eine Kettenführung vorgesehen, die eine Kettenleitvorrichtung umfasst. Die Kettenleitvorrichtung ändert ihre Position bei einem Positionswechsel der Kette. Anders ausgedrückt geht die Kettenleitvorrichtung mit der Kette mit, wenn diese einen Positionswechsel durchführt. Mit einem Positionswechsel der Kette ist im Rahmen dieser Druckschrift eine durch Schaltvorgang hervorgerufene Lageänderung der Kette gemeint. Ein derartiger Positionswechsel kann insbesondere durch einen Schaltvorgang bezüglich der Kettenblätter, also einen Kettenblattwechsel der Kette erfolgen, aber auch durch das Wechseln der Kette von einem Ritzel (hinteres Zahnrad) auf ein anderes. Die Kettenleitvorrichtung ist über eine Parallelogrammführung an dem Fahrradrahmen befestigt. Die Kettenleitvorrichtung ist genauer gesagt über eine Parallelogrammführung an dem Tretlagergehäuse des Fahrradrahmens befestigt.

Diese mit der Kette mitgehende Kettenführung kann, wie bevorzugt, in unmittelbarer Nähe zu den Kettenblättern angeordnet sein. Trotzdem ist es möglich, dass nicht in die schmalen Bereiche zwischen Hinterrad (insbesondere Reifen des Hinterrades) und der kettenseitigen Kettenstrebe oder zwischen Kettenblättern und Rahmen, (insbesondere der kettenseitigen Kettenstrebe des Rahmens) eingegriffen wird (etwa durch Befestigungsvorrichtungen oder ähnliches). Mit dem Begriff "Kettenstrebe" werden im Rahmen dieser Druckschrift die beiden beiderseits des Hinterrades in dem Bereich zwischen Tretlager und Achse des Hinterrades verlaufenden Streben bezeichnet.

Die Kettenführung des Fahrrades weist bevorzugt keine Elemente auf, die zwischen Kettenstrebe und Hinterrad oder/und zwischen Kettenstrebe und Kettenblättern angeordnet sind. Diese ohnehin kleinen Bereiche werden also nicht noch kleiner.

Der Positionswechsel der Kettenleitvorrichtung erfolgt bevorzugt selbsttätig, also ohne dass die Kettenleitvorrichtung etwa von dem Fahrer betätigt wird. Vorzugsweise greift die Kettenleitvorrichtung an das Leertrum der Kette, weiter bevorzugt in unmittelbarer Nähe zu den Kettenblättern an. Die Kettenleitvorrichtung ist also bevorzugt am unteren Kettenabschnitt und wesentlich näher an den Kettenblättern als an dem Schaltwerk (hintere Schaltvorrichtung) angeordnet.

Die Kettenführung des derartigen Fahrrades kann robust-, verschleiß- und reibungsarm ausgeführt werden.

Vorzugsweise verläuft die Ebene des Parallelogramms der Parallelogrammführung zumindest in etwa parallel zu der Ebene der Kettenstreben. Für den Fall, dass der Hinterbau des Fahrrades gefedert ist, und sich die Lage der Ebene der Kettenstreben zu dem Tretlagergehäuse ändert, ist die Ebene der Kettenstreben im nicht eingefederten Zustand gemeint. Für den Fall, dass die Kettenstreben nicht in einer Ebene liegen, verläuft die Ebene des Parallelogramms der Parallelogrammführung bevorzugt in etwa horizontal.

In der bevorzugten Ausführungsform verläuft die Ebene des Parallelogramms der Parallelogrammführung - unabhängig davon, ob die Kettenstreben in einer gemeinsamen Ebene verlaufen - zumindest in etwa horizontal. Hiermit ist gemeint, dass die Ebene des Parallelogramms der Parallelogrammführung jedenfalls näher an der Horizontalen, als an der Vertikalen ausgerichtet ist.

Es hat sich gezeigt, dass durch die derartige Anordnung der Parallelogrammführung Platz für ein großes, insbesondere breites Parallelogramm der Parallelogrammführung ist und damit die Parallelogrammführung bei akzeptablem Gewicht robust und präzise vorgesehen sein kann.

Vorzugsweise umfasst die Parallelogrammführung zwei gleichlange Lenker, die mit einem Ende jeweils an dem Tretlagergehäuse und mit dem anderen Ende jeweils an einem Verbindungsglied schwenkbar gelagert sind. Entsprechend der Definition eines Parallelogramms verlaufen die Lenker vorzugsweise stets parallel, der Abstand der Lagerungen an dem Tretlagergehäuse entspricht bevorzugt also dem Abstand der Lagerungen an dem Verbindungsglied.

Die Belastbarkeit der Kettenführung in vertikaler Richtung kann gesteigert werden, wenn die Lenker an dem Tretlagergehäuse in gabelförmigen Aufnahmen gelagert sind. Die Aufnahmen können einstückig mit dem Tretlagergehäuse oder angelötet, angeschweißt oder Teil eines lösbar befestigbaren Elements sein. In der Ausführungsform mit lösbar befestigbaren Element, kann dieses anschraubbar sein und eine an den Radius des Tretlagergehäuses angepasste Grundplatte umfassen, die an das Lagergehäuse anschraubbar ist, vorzugsweise mit einer einzigen Schraube, und an der die gabelförmigen Aufnahmen angeordnet sind.

Ebenfalls der Belastbarkeit und Spielarmut in vertikaler Richtung zugute kommt es, wenn die Lenker an dem Verbindungsglied (ebenfalls) in gabelförmigen Aufnahmen gelagert sind.

Das Verbindungsglied weist bevorzugt einen Fortsatz auf, an dem die Kettenleitvorrichtung angeordnet ist. Der Fortsatz ist bevorzugt gegenüber dem übrigen Verbindungsglied abgewinkelt, vorzugsweise um etwa 90°.

Eine besonders wenig zusätzliche Reibung hervorrufende Kettenführung ergibt sich, wenn die Kettenleitvorrichtung eine Rolle umfasst.

Eine besonders zuverlässig arbeitende Kettenführung, insbesondere bei rauem Gelände, ergibt sich, wenn die Kettenleitvorrichtung einen Käfig umfasst.

Vorzugsweise umfasst der Käfig eine Führungsscheibe und einen Führungsvorsprung. Der Führungsvorsprung ist bevorzugt an dem Fortsatz des Verbindungsgliedes, besonders bevorzugt einstückig angeordnet. Der Führungsvorsprung kann lediglich parallel zur radialen Erstreckung der Rolle ausgerichtet sein. In diesem Fall ist der Käfig nicht geschlossen. Vorzugsweise ist der Fortsatz auch parallel zur Rollenachse angeordnet, also bevorzugt abgewinkelt ausgeführt. In dieser Ausführungsform ist der Käfig geschlossen und die Kette kann diesen nicht verlassen bzw. von der Rolle abgleiten.

Vorzugsweise ist ein Anschlag vorgesehen, der die seitliche Bewegung der Kettenleitvorrichtung begrenzt. Hierdurch kann verhindert werden, dass die Kettenleitvorrichtung, etwa durch starke seitliche Bewegung der Kette oder durch Erschütterungen, seitlich über die Kettenblätter hinaus bewegt wird. Der Anschlag ist bevorzugt so vorgesehen, dass die Kettenleitvorrichtung in seitlicher Richtung nicht weiter nach außen als das äußerste (größte) Kettenblatt bewegt werden kann. Er umfasst bevorzugt eine Anschlagsschraube.

Vorzugsweise sind mehrere verschiedene Befestigungspositionen der Kettenleitvorrichtung an dem Fortsatz vorgesehen. In der Ausführungsform, in dem die Kettenleitvorrichtung als Rolle ausgebildet ist, können mehrere Bohrungen, bevorzugt Gewindebohrungen, für eine die Rolle durchgreifende Schraube in dem Fortsatz vorgesehen sein.

Vorzugsweise ist die Kettenleitvorrichtung höhenverstellbar. Damit kann unter anderem den unterschiedlichen Gegebenheiten, z.B. Abmessungen der verschiedenen Fahrradrahmen Rechnung getragen werden.

Die Erfindung umfasst auch eine Kettenführung eines vorbeschriebenen Fahrrades.

Die Erfindung soll nun anhand eines in den Zeichnungen gezeigten Ausführungsbeispiels näher erläutert werden. Es zeigen:
- Fig. 1: einen Ausschnitt einer perspektivischen Darstellung eines erfindungsgemäßen Fahrrades mit Blick von schräg unten auf das Tretlagergehäuse;
- Fig. 2: einen Ausschnitt eines erfindungsgemäßen Fahrrades mit Blick von unten auf das Tretlagergehäuse, bei ganz äußerer Position der Kettenleit-vorrichtung;
- Fig. 3: eine Ansicht wie in Fig. 2, jedoch bei mittlerer Position der Kettenleitvorrichtung;
- Fig. 4: eine Ansicht wie in Fig. 2, jedoch bei innerer Position der Kettenleitvorrichtung.

Das erfindungsgemäße Fahrrad 1 ist nur ausschnittsweise dargestellt. Der ebenfalls nur ausschnittsweise dargestellte Fahrradrahmen 2 umfasst ein Tretlagergehäuse 3 und zwei Kettenstreben 8, 8'. Das Tretlagergehäuse 3 ist das Rahmenrohr, in dem das Tretlager angeordnet ist. Das Fahrrad 1 umfasst eine Kettenschaltung und es sind drei verschiedenen große Kettenblätter 4, 4', 4" vorgesehen. Es sind ein in den Figuren nicht gezeigter Umwerfer (vordere Schaltung) und ein Schaltwerk (hintere Schaltung) vorgesehen. Die Kette ist in den Figuren nicht dargestellt. Es ist eine als Ganzes mit 5 bezeichnete Kettenführung vorgesehen, die eine Kettenleitvorrichtung 6 umfasst, welche mittels einer Parallelogrammführung 7 an dem Tretlagergehäuse 3 angeordnet ist. Die Kettenleitvorrichtung 6 umfasst eine Rolle 15, die wie die Rolle eines Schaltwerks ausgeführt sein kann. Die Rolle 15 weist Zahnansätze auf.

Die Parallelogrammführung 7 umfasst zwei gleichlange, parallel zueinander ausgerichtete Lenker 10, 10'. Jeder Lenker 10, 10' ist mit seinem bezogen auf die Fahrtrichtung F des Fahrrades vorderen Ende 10a, 10a' in gabelförmigen Aufnahmen 12, 12' am Tretlagergehäuse 3 schwenkbar gelagert.

Die gabelförmigen Aufnahmen 12, 12' sind an einem lösbar an dem Tretlagergehäuse 3 befestigbaren Element 19 angeordnet. Das lösbare Element 19 umfasst eine Grundplatte 20, die an den Radius des Tretlagergehäuses 3 angepasst ist, indem sie komplementär zu der Oberfläche des Tretlagergehäuses 3 gekrümmt ist. Die Grundplatte 20 weist ein zentrales, in Fahrtrichtung F des Fahrrades ausgerichtetes Langloch 21 auf. Durch dieses Langloch 21 ist die Grundplatte 20 mit dem Tretlagergehäuse 3 mittels einer Schraube 22, die in eine Gewindebohrung des Tretlagergehäuses 3 eingreift, verschraubt. Durch die Befestigung mittels des Langloches 21 wird unter anderem erreicht, dass die Neigung der Ebene P des Parallelogramms 9 der Parallelogrammführung 7 um die Achse A des Tretlagergehäuses 3 einstellbar ist. Hierdurch kann die Höhe der Kettenleitvorrichtung 6 angepasst werden. Die Kettenleitvorrichtung 6 der Kettenführung 5 ist auf diese Weise also höhenverstellbar. Die Kettenleitvorrichtung 6 der Kettenführung 5 ist genauer gesagt stufenlos höhenverstellbar.

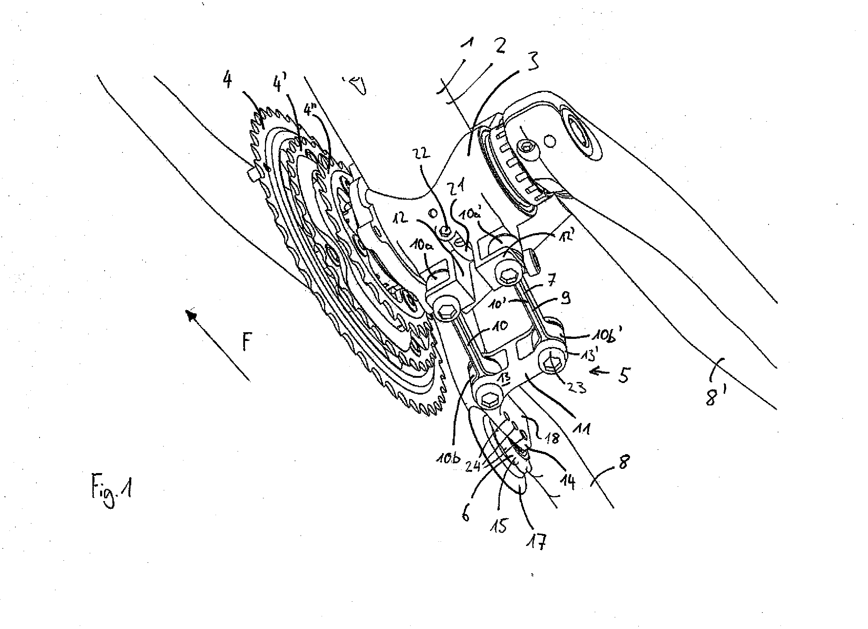

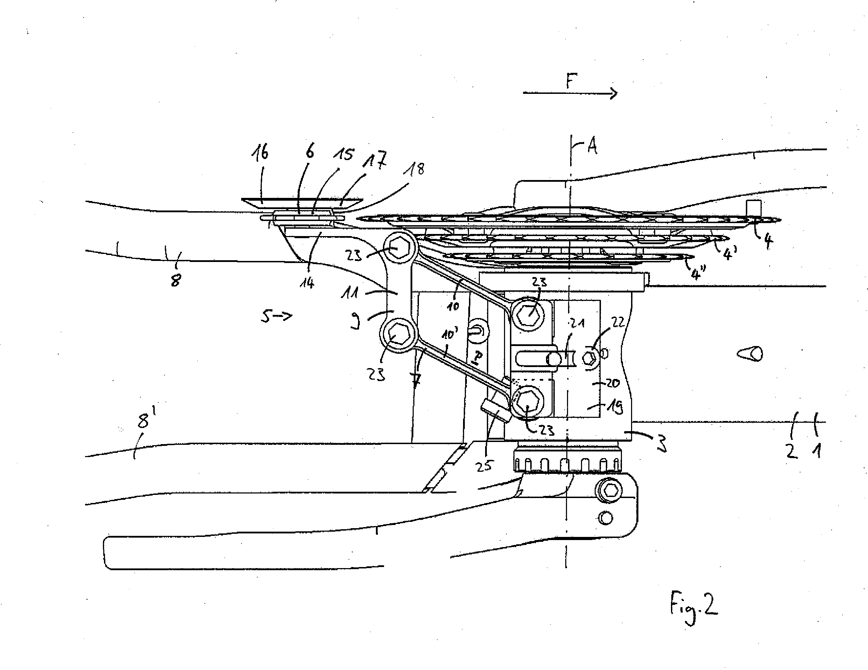

Die bezogen auf die Fahrtrichtung F hinteren Enden 10b, 10b' der Lenker 10, 10' sind in gabelförmigen Aufnahmen 13, 13' eines Verbindungsgliedes 11 schwenkbar gelagert. Die vorderen 10a, 10a' und hinteren 10b, 10b' Enden der Lenker 10, 10' sind zum Zwecke der schwenkbaren Lagerung buchsenförmig ausgeformt, in den vorderen 12, 12' bzw. hinteren 13, 13' gabelförmigen Aufnahmen angeordnet und genau eine Schraube 23 ist durch jede gabelförmige Aufnahme und jedes buchsenförmige Ende geführt (Fig. 1 und 2).

Das Verbindungsglied 11 weist an seinem kettenseitigen Ende einen etwa um 90° zu dem übrigen Verbindungsglied 11 abgewinkelten Fortsatz 14 auf, an dem die Rolle 15 befestigt ist. Von der Rolle 15 auf die Parallelogrammführung ausgeübte Kippkräfte können aufgrund der großen Breite B des Parallelogramms (großer Abstand zwischen den vorderen bzw. hinteren Schwenklagern) gut aufgenommen werden und führen daher nicht zu einem Verwinden bzw. Verdrehen der Führung. Die Rolle 15 ist von einer Schraube durchgriffen, die in eine Gewindebohrung 24 in dem Fortsatz 14 greift. Es sind drei verschiedene, in Fahrtrichtung F voneinander beabstandete Gewindebohrungen 24 in dem Fortsatz 14 vorgesehen. Die Kettenleitvorrichtung 6 ist daher auch in Richtung der Fahrtrichtung F verstellbar, im gezeigten Ausführungsbeispiel in drei Stufen.

Um zu verhindern, dass die Kette bei starken Bewegungen von der Rolle 15 abspringen kann, ist die Rolle 15 von einem Käfig 16 umschlossen. Der Käfig 16 wird durch eine Führungsscheibe 17 und einen Führungsvorsprung 18 gebildet (Fig. 2). Die Führungsscheibe 17 ist außen an der Rolle 15 parallel zu dieser angeordnet und überragt die Rolle 15. Der Führungsvorsprung 18 ist einstückig mit dem Fortsatz 14 des Verbindungsgliedes 11 ausgeführt. Er umfasst einen vertikalen Bereich und einen oberhalb der Rolle 15 abgewinkelten horizontalen Bereich, der nahe der Führungsscheibe 17 endet oder diese berührt (Fig. 2).

Da die Kette in dem Käfig 16, der die Rolle 15 umschließt, gesichert ist, kann sie nicht vom Kettenblatt 4, 4', 4" herunterfallen.

Die Lenker 10, 10' weisen in ihren mittleren Bereichen einen Querschnitt auf, der etwa rechteckig ist und seine längere Erstreckung verläuft vertikal. Sie können daher Biegebelastungen in vertikaler Richtung gut widerstehen. An beiden Enden weisen sie jeweils eine zylinderförmige Verdickung auf, in der die Buchse zur Lagerung bereitgestellt wird. Der Durchmesser der Verdickung ist mehr als doppelt so groß wie die Breite (geringere Erstreckung) des rechteckförmigen Querschnitts. Die derart geformten Lenker können den auftretenden Belastungen bei geringem Gewicht gut standhalten. Die Kettenführung ist in vertikaler Richtung (durch Kettenspannung und Erschütterungen hervorgerufene Kräfte) gut belastbar.

Es ist eine Anschlagsschraube 25 an einem der Lenker 10' in der Nähe seines vorderen Endes 10a' vorgesehen. Fig. 2 zeigt, dass die Anschlagsschraube 25 durch Anschlagen an eine Seitenwandung (gestrichelt dargestellt) einer gabelförmigen Aufnahme 12' eine Begrenzung der seitlichen Beweglichkeit der Rolle 15 bewirkt. Diese kann nicht weiter nach außen bewegt werden, als bis vor das äußerste Kettenblatt 4. Die Anschlagsschraube 25 ist an dem nicht-kettenseitigen Lenker 10' angeordnet. Dieser kann wegen der bezogen auf das Parallelogramm 9 nicht-mittigen Anordnung der Rolle 15 geringer belastet sein, als der kettenseitige Lenker 10.

Die Buchsen der Enden der Lenker 10, 10' sind gleitend schwenkbar gelagert. Die Reibung der Gleitlager ist so groß, dass einerseits die Kettenführungsfunktion übernommen wird, also die Kettenleitvorrichtung 6 seitliche Bewegungen des Leertrums der Kette im Bereich der Kettenleitvorrichtung 6 abschwächt oder eliminiert. Andererseits ist die Reibung so gering, dass das selbsttätige Mitgehen der Kettenleitvorrichtung 6 mit der Kette bei einem Positionswechsel der Kette gewährleistet ist bzw. dies keine zu großen Kräfte seitlich auf die Kette bzw. die Kettenblätter hervorruft.

Die Kette verläuft auf der oberen Seite der Rolle 15. Die Kettenleitvorrichtung 6 geht aufgrund der Parallelführung immer mit der Kettenlinie mit, egal welche Kettenblatt-Ritzelkombination gerade gefahren wird. Dies macht es möglich, die Kettenführung 5 auch an einem Dreifachkettenblatt zu nutzen. Die Rolle 15 ist stets in einer Ebene angeordnet, die parallel zu den Ebenen der Kettenblätter 4, 4', 4" verläuft. Sie behält diese Ausrichtung aufgrund der Parallelogrammführung also auch bei einem Positionswechsel der Kette bei.

Die vertikale Position der Rolle 15 bleibt, nachdem sie einmal eingestellt ist, zumindest in etwa unverändert. Ihre Position in Fahrtrichtung F ändert sich, nachdem sie durch Auswahl einer Gewindebohrung 24 gewählt wurde, aufgrund der Parallelogrammführung lediglich geringfügig.

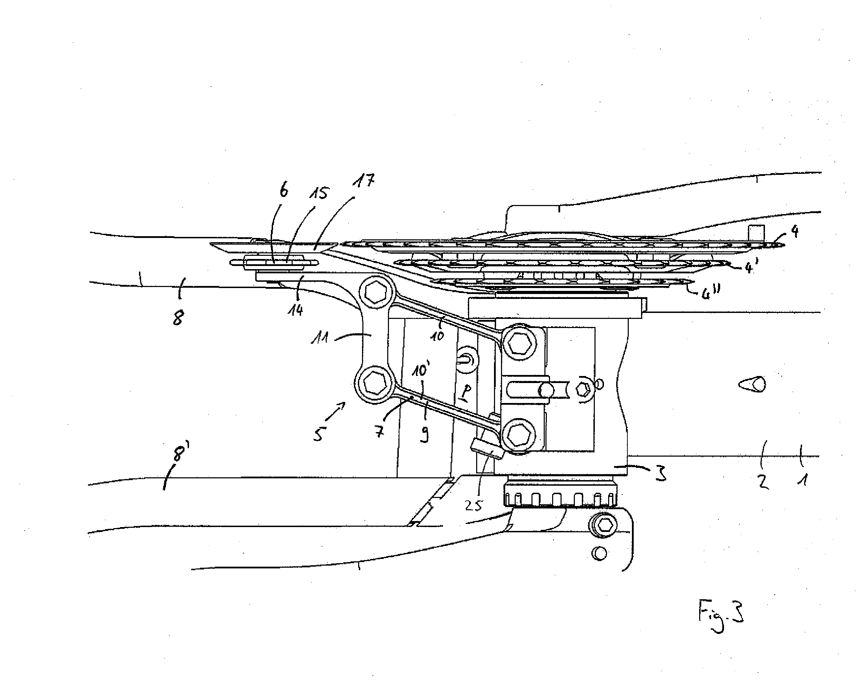

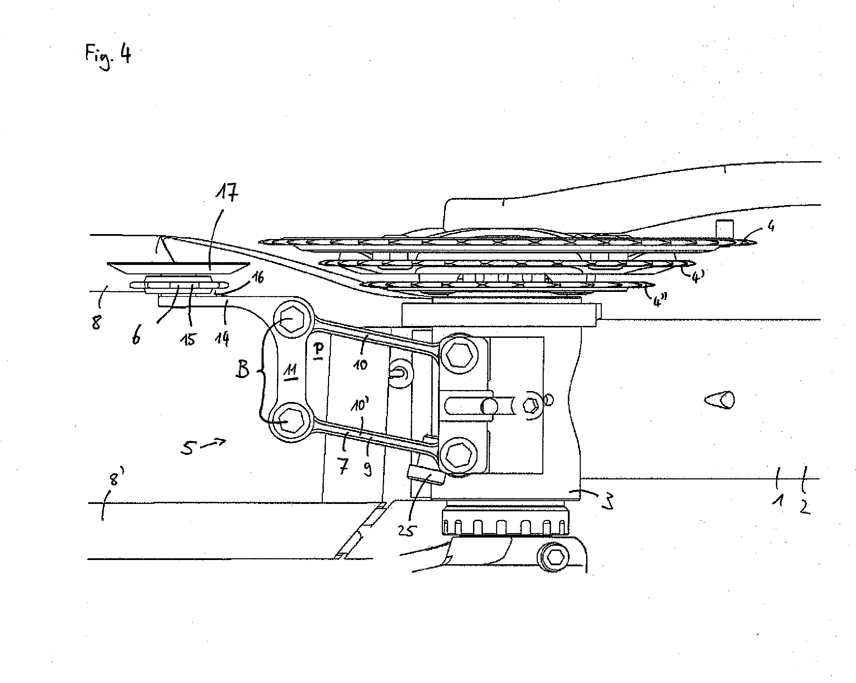

Fig. 2 zeigt die Situation, in der die nicht dargestellte Kette auf dem großen Kettenblatt 4 ist. Die Rolle 15 befindet sich vor diesem großen Kettenblatt 4. Bei Fig. 3 befindet sich die nicht dargestellte Kette auf dem mittleren Kettenblatt 4'. Die Position der Rolle 15 ist dementsprechend vor dem mittleren Kettenblatt. Bei Fig. 4 ist die nicht dargestellte Kette auf dem kleinen Kettenblatt. Dementsprechend ist auch die Rolle 15 vor dem kleinen Kettenblatt 4" positioniert.

### Bezugszeichenliste:

- 1: Fahrrad
- 2: Fahrradrahmen
- 3: Tretlagergehäuse
- 4, 4', 4": Kettenblätter
- 5: Kettenführung
- 6: Kettenleitvorrichtung
- 7: Parallelogrammführung
- 8, 8': Kettenstreben
- 9: Parallelogramm
- 10, 10': Lenker
- 10a, 10a': vorderes Ende der Lenker
- 10b, 10b': hinteres Ende der Lenker
- 11: Verbindungsglied
- 12, 12': gabelförmige Aufnahmen (Tretlager)
- 13, 13': gabelförmigen Aufnahmen (Verbindungsglied)
- 14: Fortsatz
- 15: Rolle
- 16: Käfig
- 17: Führungsscheibe
- 18: Führungsvorsprung
- 19: lösbares Element
- 20: Grundplatte
- 21: Langloch
- 22: Schraube (für die Grundplatte)
- 23: Schraube (für die Lenker)
- 24: Gewindebohrungen
- 25: Anschlagsschraube
- A: Achse
- B: Breite des Parallelogramms
- F: Fahrtrichtung
- P: Ebene des Parallelogramms

## Patentansprüche

1. Fahrrad (1),
mit einem ein Tretlagergehäuse (3) umfassenden Fahrradrahmen (2),
mit mindestens zwei Kettenblättern (4, 4', 4"),
mit einer Kette,
und mit einer Kettenführung (5), die eine Kettenleitvorrichtung (6) umfasst, die ihre Position bei einem Positionswechsel der Kette ändert, **dadurch gekennzeichnet, dass** die Kettenleitvorrichtung (6) an dem Tretlagergehäuse (3) des Fahrradrahmens (2) befestigt ist.

2. Fahrrad nach Anspruch 1, **dadurch gekennzeichnet, dass** die Kettenleitvorrichtung (6) über eine Parallelogrammführung (7) an dem Tretlagergehäuse (3) des Fahrradrahmens (2) befestigt ist.

3. Fahrrad nach Anspruch 2, mit Kettenstreben (8, 8'), **dadurch gekennzeichnet, dass** die Ebene (P) des Parallelogramms (9) der Parallelogrammführung (7) zumindest in etwa parallel zu der Ebene der Kettenstreben (8, 8') verläuft.

4. Fahrrad nach Anspruch 2 oder 3, **dadurch gekennzeichnet, dass** die Ebene (P) des Parallelogramms (9) der Parallelogrammführung (7) zumindest in etwa horizontal verläuft.

5. Fahrrad nach einem der Ansprüche 2 bis 4, **dadurch gekennzeichnet, dass** die Parallelogrammführung (7) zwei gleichlange Lenker (10, 10') umfasst, die mit einem Ende (10a, 10a') jeweils an dem Tretlagergehäuse (3) und mit dem anderen Ende (10b, 10b') jeweils an einem Verbindungsglied (11) schwenkbar gelagert sind.

6. Fahrrad nach Anspruch 5, **dadurch gekennzeichnet, dass** die Lenker (10, 10') an dem Tretlagergehäuse (3) in gabelförmigen Aufnahmen (12, 12') gelagert sind.

7. Fahrrad nach Anspruch 5 oder 6, **dadurch gekennzeichnet, dass** die Lenker (10, 10') an dem Verbindungsglied (11) in gabelförmigen Aufnahmen (13, 13') gelagert sind.

8. Fahrrad nach einem der Ansprüche 5 bis 7, **dadurch gekennzeichnet, dass** das Verbindungsglied (11) einen Fortsatz (14) aufweist, an dem die Kettenleitvorrichtung (6) angeordnet ist.

9. Fahrrad nach einem der Ansprüche 1 bis 8, **dadurch gekennzeichnet, dass** die Kettenleitvorrichtung (6) eine Rolle (15) und einen Käfig (16) umfasst.

10. Fahrrad nach Anspruch 9, **dadurch gekennzeichnet, dass** der Käfig (16) eine Führungsscheibe (17) und einen Führungsvorsprung (18) umfasst.

11. Fahrrad nach einem der Ansprüche 1 bis 10, **dadurch gekennzeichnet, dass** die Kettenleitvorrichtung (6) höhenverstellbar ist.

12. Fahrrad nach Anspruch 11, **dadurch gekennzeichnet, dass** die Ketteleitvorrichtung (6) an einem lösbar an dem Tretlagergehäuse (3) befestigbaren Element (19) angeordnet ist.

13. Fahrrad nach Anspruch 12, **dadurch gekennzeichnet, dass** das Element (19) eine Grundplatte (20) umfasst, die etwa komplementär zur Oberfläche des Tretlagergehäuses (3) gekrümmt ist.

14. Fahrrad nach Anspruch 13, **dadurch gekennzeichnet, dass** die Grundplatte (20) in verschiedenen Positionen zur Oberfläche des Tretlagergehäuses (3) befestigbar ist, derart, dass die Höhe der Kettenleitvorrichtung (6) anpassbar ist.

15. Kettenführung (5) eines Fahrrades (1) nach einem der Ansprüche 1 bis 14.
